# FASCICULE DE BREVET EUROPEEN

(11) **EP 3 582 991 B1**
(45) Date de publication et mention de la délivrance du brevet: **16.09.2020**
(21) Numéro de dépôt: 18706812.7
(22) Date de dépôt: 12.02.2018
(51) Int. Cl.: B60L 5/22, B60L 5/28

(54) **PANTOGRAPHE ET VÉHICULE FERROVIAIRE COMPORTANT UN TEL PANTOGRAPHE**
SCHERENSTROMABNEHMER UND SCHIENENFAHRZEUG MIT SOLCH EINEM SCHERENSTROMABNEHMER
PANTOGRAPH AND RAIL VEHICLE COMPRISING SUCH A PANTOGRAPH

(30) Priorité: 15.02.2017 FR 1751205
(43) Date de publication de la demande: 25.12.2019
(73) Titulaire: Faiveley Transport Tours, 37701 Saint Pierre des Corps Cedex (FR)
(72) Inventeur: CAFFIER, Benjamin, 37800 Sainte Maure De Touraine (FR)
(74) Mandataire: Schmidt, Martin Peter
(86) Numéro de dépôt international: PCT/FR2018/050328
(87) Numéro de publication internationale: WO 2018/150129

(56) Documents cités:
- WO-A1-02/22322
- DE-A1-102013 203 199
- FR-A1- 2 850 330
- JP-A- H08 275 303
- JP-A- 2007 252 114

## Description

### DOMAINE TECHNIQUE

La présente invention concerne le domaine des pantographes, en particulier pour un véhicule ferroviaire.

### ARRIÈRE-PLAN TECHNOLOGIQUE

Pour un véhicule ferroviaire muni d'un moteur de traction électrique, les pantographes assurent le contact électrique entre l'unité de traction (par exemple la locomotive) et la caténaire. Dans ce but le pantographe exerce, contre la caténaire, une force de pression qui est en théorie sensiblement constante. De plus, le pantographe est soumis aux effets aérodynamiques en fonction de son développement (qui dépend de la hauteur de la caténaire par rapport à la voie ferroviaire), en fonction de la vitesse d'avancement du véhicule ferroviaire, et en fonction de la vitesse de direction du vent. Selon le cas, les effets aérodynamiques précités peuvent augmenter ou diminuer la pression exercée de manière effective par le pantographe contre la caténaire. Pour les trains à grande vitesse, les effets aérodynamiques peuvent être très considérables. D'une manière générale il est souhaitable que la pression exercée par le pantographe contre la caténaire soit indépendante du développement du pantographe, quelle que soit la vitesse du véhicule ferroviaire.

Il est connu de disposer des ailerons sur le pantographe afin de modifier son comportement aérodynamique. Cela est décrit dans de nombreux documents, par exemple RU 2 481 200 C1, KR 10-2013-0075577, et JP H05328512.

A titre d'exemple, la demande de brevet japonais publiée sous le numéro JP H08308013 A décrit un pantographe du type comportant :
- un châssis auquel un repère est attaché, le repère comportant une direction longitudinale, une direction verticale et une direction transversale, la direction longitudinale et la direction verticale définissant ensemble un plan vertical,
- un archet destiné à être au contact d'une caténaire pour capter un courant d'alimentation passant dans la caténaire,
- un bras articulé reliant l'archet au châssis et conçu pour se développer verticalement afin de déplacer dans le plan vertical l'archet par rapport au châssis, ce bras comprenant une tige supérieure principale et une tige supérieure auxiliaire,
- un ensemble d'aileron comprenant au moins un aileron formant, dans le plan vertical, un angle avec la direction longitudinale,
- un dispositif d'orientation de l'aileron conçu pour faire varier l'angle de l'aileron avec la direction longitudinale en fonction du déploiement du bras articulé, ce dispositif d'orientation comprenant des moyens de commande de la variation de l'angle de l'aileron, ces moyens de commande comprenant un premier organe de commande, articulé à la fois sur la tige supérieure principale et sur la tige supérieure auxiliaire du bras.

Un pantographe de ce type est également connu du document JP H08275303.

Dans ce pantographe connu, le dispositif d'orientation est conçu pour faire augmenter graduellement l'angle de l'aileron au fur et à mesure du déploiement du bras articulé, depuis une valeur négative par rapport à l'horizontale jusqu'à une valeur positive par rapport à l'horizontale. Lorsque l'angle est négatif, l'aileron réduit la pression de l'archet sur la caténaire, tandis que lorsque l'angle est positif, l'aileron augmente la pression de l'archet sur la caténaire. Ainsi, l'aileron compense l'effort aérodynamique exercé sur le pantographe, cet effort réduisant d'autant plus la pression de l'archet sur la caténaire que l'élévation du pantographe est importante.

La variation d'angle de l'aileron est déterminée par la longueur des côtés d'un quadrilatère. Si le quadrilatère est un parallélogramme, il n'y a aucune variation de l'angle quelle que soit l'élévation du pantographe. En modifiant la longueur de deux côtés adjacents, il est possible d'ajuster la variation d'angle. Cette invention est bien adaptée à la plupart des situations, lorsque la hauteur de la caténaire reste dans une plage limitée sur les zones où le train peut rouler à haute vitesse haute vitesse, là où l'effort aérodynamique est important. Par contre, lorsque le pantographe doit fonctionner à haute vitesse sur une large plage d'extension, le dispositif n'offre pas assez de possibilités de modification de la loi de variation d'angle de l'aileron pour compenser au plus juste l'effort aérodynamique.

Ce type de situation se rencontre par exemple lorsque la variation du développement du pantographe augmente. Traditionnellement, les pantographes sont conçus pour un développement qui varie entre environ 300 mm et environ 2 600 mm. Pour certains programmes de véhicules ferroviaires, il s'avère nécessaire de prévoir un développement plus important, jusqu'à 3 600 mm.

Afin de piloter de manière appropriée la variation de l'angle des ailerons, on peut prévoir de faire appel à des ailerons de type motorisé. Cette solution est cependant coûteuse, et induit un surpoids significatif.

On a également proposé, notamment dans FR 2 850 330, WO 02 22 322, DE 10 2013 203199 et JP 2007 252114, différents agencements de pantographes qui ne remédient cependant pas aux inconvénients ci-dessus.

Dans ces conditions l'invention a pour but de proposer un pantographe qui, tout en s'affranchissant de l'utilisation d'ailerons motorisés, permet de pallier au moins en partie les problèmes précédents, liés à l'enseignement de JP H08308013 A et de JP H08275303.

### OBJETS DE L'INVENTION

Un premier objet de l'invention est un pantographe du type précité, caractérisé en ce que les moyens de commande de la variation de l'angle de l'aileron comprennent en outre un deuxième organe de commande, solidaire de la tige supérieure principale, ce dispositif d'orientation étant adapté pour que
- sur une première plage de développement du bras articulé dans laquelle l'archet se déplace entre une position basse et une position intermédiaire, le premier organe de commande est apte à commander la variation de l'angle de l'aileron indépendamment du deuxième organe de commande, de manière à conférer un premier profil de variation d'angle à l'aileron sur cette première plage ;
- sur une deuxième plage de développement du bras articulé dans laquelle l'archet se déplace entre la position intermédiaire et une position haute, le deuxième organe de commande est apte à commander la variation de l'angle de l'aileron, de manière à conférer un deuxième profil de variation d'angle à l'aileron sur cette deuxième plage.

Conformément à l'invention, le développement global du bras articulé est divisé en deux plages, typiquement successives. Dans une première plage, ou plage initiale, la variation de l'angle de chaque aileron est commandée par un premier organe de commande. Cela permet de conférer un premier type de profil à cette variation d'angle de l'aileron. En particulier, cet angle peut être sensiblement constant sur la totalité de cette première plage. Cela signifie que la différence entre les valeurs extrêmes de cet angle, le long de cette première plage, est inférieure à une première valeur.

Puis dans une deuxième plage, ou plage finale, l'invention fait appel à un deuxième organe, propre à commander la variation de l'angle de l'aileron. Ce deuxième organe n'intervient pas dans la commande de la variation d'angle, dans la première plage évoquée au paragraphe précédent. En d'autres termes, dans la première plage, la variation précitée est commandée par le premier organe de commande, indépendamment du deuxième organe de commande alors que, dans la deuxième plage, cette variation est commandée par le deuxième organe de commande en combinaison avec le premier organe de commande.

Cela permet de conférer un deuxième type de profil à cette variation d'angle de l'aileron, sur cette deuxième plage. En particulier, l'angle de l'aileron avec la direction longitudinale peut augmenter de manière significative. Cela signifie que la différence entre les valeurs extrêmes de cet angle, le long de cette deuxième plage, est supérieure à une deuxième valeur, substantiellement supérieure à la première valeur ci-dessus. Cette deuxième valeur est typiquement supérieure à 2°, préférentiellement supérieure à 5°, et de manière préférée comprise entre 20° et 40°.

De manière préférée la valeur la plus basse de l'angle précité, le long de cette deuxième plage, correspond au début de cette deuxième plage alors que la valeur la plus élevée de cet angle, le long de cette deuxième plage, correspond à la fin de cette deuxième plage. En d'autres termes, la valeur de cet angle augmente, notamment de façon continue, en particulier de façon linéaire, entre le début et la fin de la deuxième plage de développement.

On notera qu'il est du mérite de la Demanderesse d'avoir identifié que les inconvénients de l'art antérieur sont en particulier liés au fait que la variation de l'angle des ailerons est commandée par un unique organe de commande, dont les possibilités de réglage sont trop limitées en présence de grandes plages d'extensions du pantographe.

Grâce à l'invention, il est en particulier possible d'activer l'aileron uniquement sur la deuxième plage de développement du bras articulé à grande extension. Ainsi, l'aileron n'intervient pas sur la première plage de développement, correspondant aux situations où la caténaire est basse.

Selon d'autres caractéristiques de l'invention :
- le premier profil de variation d'angle correspond à un angle (α404, α406) de valeur sensiblement constante, notamment nulle.
- le deuxième profil de variation d'angle correspond à un angle (α404, α406) de valeur croissante, notamment linéaire.
- le premier organe de commande (504, 506) est articulé sur la tige supérieure principale (216) au moyen d'une liaison pivot et, sur la tige supérieure auxiliaire (220), au moyen d'une liaison ponctuelle.
- le premier organe de commande (504, 506) est articulé sur la tige supérieure principale (216) et sur la tige supérieure auxiliaire (220), de manière à garder un angle sensiblement constant avec la direction longitudinale (L).
- le premier organe de commande (506) comprend une embase creuse (506A), dans le volume intérieur de laquelle est reçu un galet (507) monté pivotant sur la tige supérieure auxiliaire (220), autour d'un axe transversal (A507), ainsi qu'un corps massif (506B) fixé sur l'embase (506A), notamment de manière amovible, ledit corps étant monté pivotant sur la tige supérieure principale (216) autour d'un autre axe transversal (A504, A506).
- l'aileron (404, 406) est articulé sur le premier organe de commande (504,506) et le pantographe comprend des moyens d'immobilisation (520, 522), propres à immobiliser l'ensemble d'aileron (404, 406) par rapport au premier organe de commande (504, 506) dans une position d'immobilisation, dans la première plage de développement.
- l'aileron (404, 406) est articulé sur le premier organe de commande (504,506) au moyen d'une liaison pivot (A410).
- les moyens d'immobilisation comprennent un dispositif élastique (520, 522), notamment au moins un ressort de traction (520, 522), dont une première extrémité est solidaire de l'ensemble d'aileron (404, 406) et dont l'autre extrémité est solidaire de la tige supérieure principale (216).
- le deuxième organe de commande (526, 527) est apte à déplacer l'ensemble d'aileron à partir de sa position d'immobilisation, dans la deuxième plage de développement.
- l'aileron (404, 406) est articulé sur le deuxième organe de commande (526, 527) pendant la deuxième plage de développement du bras articulé (201), au moyen d'une liaison ponctuelle (414/527).
- le deuxième organe de commande est une butée (526) présentant une surface de butée (527), l'ensemble d'aileron (504, 506) étant apte à se déplacer le long d'au moins une partie de cette surface de butée (527), dans la deuxième plage de développement.
- la surface de butée est une surface de came.
- l'ensemble d'aileron comprend un arbre (412) muni d'un galet (414), ledit galet étant propre à se déplacer le long d'au moins une partie de la surface de butée (527).
- la première distance verticale (D1) entre une position basse et une position intermédiaire de l'archet est comprise entre 2 000 mm et 3 000 mm, par exemple égale à 2 500 mm.
- la deuxième distance verticale (D2) entre une position intermédiaire et une position haute de l'archet est comprise entre 500 mm et 1 500 mm, par exemple égale à 1 000 mm.
- ladite première plage de développement forme jusqu'à 80% de la plage de développement totale du bras articulé (210), alors que ladite deuxième plage de développement forme au moins 20% de la plage de développement totale du bras articulé (210).

Selon un deuxième objet de l'invention, il est également proposé un véhicule ferroviaire comportant :
- un toit,
- un pantographe tel que ci-dessus, le châssis du pantographe étant fixé au toit du véhicule ferroviaire.

### DESCRIPTION DES FIGURES

Les figures 1 à 15 illustrent des modes de réalisation de l'invention, mais ne limitent pas la portée de l'invention.
La figure 1 est une vue de profil d'un véhicule ferroviaire mettant en oeuvre l'invention.
La figure 2 est une vue de profil d'un pantographe du véhicule ferroviaire de la figure 1.
La figure 3 est une vue en trois dimensions d'un dispositif de compensation de pression du pantographe de la figure 2 comportant en particulier un système d'aileron.
La figure 4 est une vue en trois dimensions du système d'aileron de la figure 3 et d'un dispositif d'orientation de ce système d'aileron.
La figure 5 est un graphique représentant l'évolution d'un angle d'ailerons du système d'aileron des figures 3 et 4 en fonction d'un développement du pantographe.
Les figures 6 à 10 sont des vues de profil du système d'aileron et du dispositif d'orientation de ce système d'aileron, lors d'étapes successives du développement du pantographe.
Les figures 11 à 15 sont des schémas de principe, illustrant notamment les liaisons mécaniques entre les différents éléments du système d'aileron et de son dispositif d'orientation, ainsi que le positionnement de ces éléments lors des étapes illustrées aux figures 6 à 10.

Les repères numériques suivants sont utilisés dans les figures :

| | | | |
|---|---|---|---|
| 100 | Véhicule ferroviaire | f406 | Pivotement de 406 |
| 102 | Voie ferroviaire | 408,410 | Bielle |
| 104 | Caténaire | A408,A410 | Axe de rotation de 408,410 |
| 106 | Toit du véhicule 100 | 412 | Arbre |
| 108 | Pantographe | A412 | Axe de rotation de 412 |
| 202 | Châssis du pantographe 108 | f412 | Pivotement de 412 |
| 204 | Cadre du châssis 202 | F412 | Translation de 412 |
| 206 | Isolateurs électriques | 414 | Galet |
| 208 | Archet | f414 | Pivotement de 414 |
| 210 | Bras articulé | 502 | Dispositif d'orientation |
| 214 | Tige inférieure principale | 504,506 | Bielles de commande |
| 216 | Tige supérieure principale | A504,A506 | Axe de rotation de 504,506 |
| 218 | Tige inférieure auxiliaire | F506 | Translation de 506 |
| 220 | Tige supérieure auxiliaire | 506A | Embase de 506 |
| 224 | Dispositif de compensation | 506B | Corps de 506 |
| 222 | Dispositif de rappel | 507 | Galet |
| 402 | Système d'aileron | A507 | Axe de rotation de 507 |
| 404,406 | Aileron | 508,510 | Encoche |
| α406 | Angle de 406 | 512,514 | Butée avant |
| 516,518 | Butée arrière | 520,522 | Ressort |
| 524 | Cornière | 525 | Ailes de 524 |
| 526 | Ame de 524 | 527 | Surface de butée de 526 |
| 528 | Pion de 524 | | |

### DESCRIPTION DÉTAILLÉE

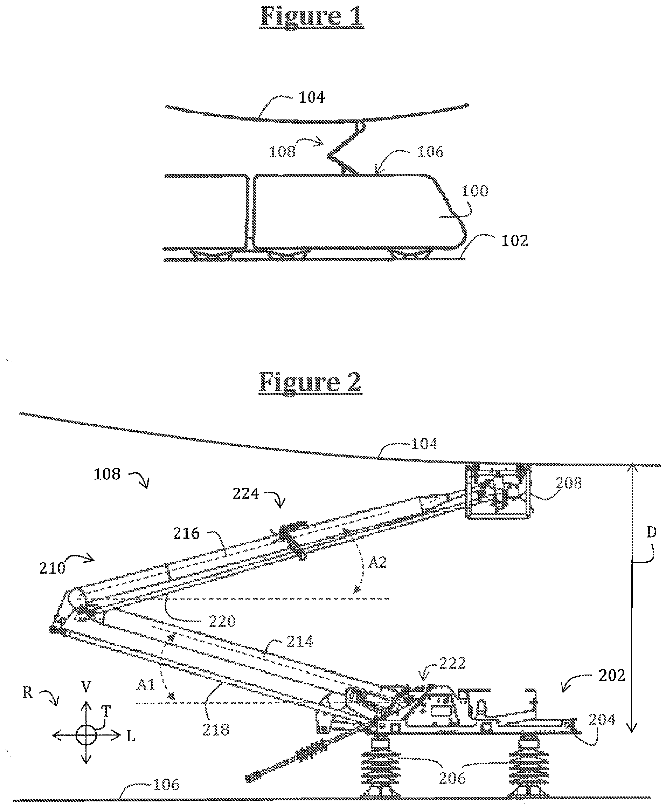

En référence à la figure 1, un véhicule ferroviaire **100** mettant en œuvre l'invention va à présent être décrit.

Le véhicule ferroviaire **100** est conçu pour circuler sur une voie ferroviaire 102 au-dessus de laquelle s'étend une caténaire **104** dans laquelle passe un courant électrique d'alimentation. Le véhicule ferroviaire **100** comporte un toit **106** sur lequel est fixé un pantographe **108** conçu pour capter le courant électrique d'alimentation de la caténaire **104** et ainsi alimenter électriquement le véhicule ferroviaire **100.**

En référence notamment à la figure 2, le pantographe **108** va à présent être décrit plus en détail.

Le pantographe **108** comporte tout d'abord un châssis **202** fixé au toit **106** du véhicule ferroviaire **100.** Dans l'exemple décrit, le châssis **202** comporte un cadre **204** et des isolateurs électriques **206** reliant le cadre **204** au toit **106** du véhicule ferroviaire **100.**

Un repère R est attaché au châssis **202.** Le repère R comporte une direction longitudinale L, une direction verticale V et une direction transversale T (perpendiculaire au plan de la feuille sur la figure 2). La direction longitudinale L et la direction verticale V définissent ensemble un plan vertical (le plan de la feuille sur la figure 2).

Dans l'exemple décrit, la direction longitudinale L correspond à la direction horizontale usuelle dans le sens de circulation du véhicule ferroviaire **100** lorsque ce dernier circule sur une voie ferroviaire **102** horizontale. En outre, la direction verticale V correspond à la direction verticale usuelle.

Dans la description et les revendications qui vont suivre, les termes de positionnement utilisés seront entendus par référence à ce repère R. En particulier, les angles évoqués par la suite seront pris dans le plan vertical.

En outre, dans la description qui va suivre, un angle sensiblement constant est un angle constant à 1° près.

Le pantographe **108** comporte en outre un archet **208** destiné à être au contact de la caténaire **104** afin de capter le courant d'alimentation.

La caténaire **104** est située verticalement à une distance du châssis **202** qui peut fortement varier. Par exemple, cette distance peut varier entre 600 mm et 3 600 mm.

Ainsi, pour pallier les variations de la distance entre la caténaire **104** et le châssis **202**, le pantographe **108** comporte en outre un bras articulé **210** reliant l'archet **208** au châssis **202**, de sorte que l'archet **208** se trouve à une distance D variable du châssis **202.** Le bras articulé **210** est conçu pour se développer verticalement afin de déplacer l'archet **208** par rapport au châssis **202** dans le but de maintenir l'archet **208** au contact de la caténaire **104.** Ainsi, le bras articulé **210** est conçu pour, d'une part, se développer verticalement afin d'écarter l'archet **208** du châssis **202** lorsque la distance entre la caténaire **104** et le châssis **202** augmente et, d'autre part, se replier verticalement afin de rapprocher l'archet **208** du châssis **202** lorsque la distance entre la caténaire **104** et le châssis **202** diminue.

Plus précisément, dans l'exemple décrit, le bras articulé **210** est en deux parties. Il comporte ainsi une tige inférieure principale **214** montée transversalement pivotante sur le châssis **202** (par exemple, sur le cadre **204**). La tige inférieure principale **214** présente un angle A1 avec la direction longitudinale L. Le bras articulé **210** comporte en outre une tige supérieure principale **216** montée transversalement pivotante sur la tige inférieure principale **214** et présentant un angle A2 avec la direction longitudinale L. L'archet **208** est monté transversalement pivotant sur la tige supérieure principale **216.**

Le bras articulé **210** comporte en outre une tige inférieure auxiliaire **218** montée transversalement pivotante sur le châssis **202** (par exemple, sur le cadre **204**) et sur la tige supérieure principale **216**, de manière à asservir l'angle A2 de la tige supérieure principale **216** à l'angle A1 de la tige inférieure principale **214**, de sorte que l'augmentation de l'angle A1 entraîne l'augmentation de l'angle A2.

Le bras articulé **210** comporte en outre une tige supérieure auxiliaire **220** montée transversalement pivotante sur la tige inférieure principale **214** et sur l'archet **208**, de manière à ce que l'archet **208** garde un angle sensiblement constant avec la direction longitudinale L quel que soit le développement du bras articulé **210.**

Le pantographe **108** comporte en outre un dispositif de rappel **222** conçu pour inciter le bras articulé **210** à se développer. Ainsi, l'archet **208** est maintenu au contact de la caténaire **104.** Le dispositif de rappel **222** est par exemple conçu pour faire pivoter la tige inférieure principale **214** afin d'augmenter l'angle A1. Le dispositif de rappel **222** comporte par exemple un coussin d'air, un ressort ou bien un moteur électrique.

Comme expliqué dans la partie introductive de la présente description, du fait de sa construction mécanique, le pantographe assure une pression constante sur la caténaire. Cependant, cette pression est susceptible d'être modifiée à cause des effets aérodynamiques.

Pour augmenter la pression de l'archet **208** sur la caténaire **104** lorsque le bras articulé **210** est fortement développé, le pantographe **108** comporte en outre un dispositif de compensation de pression **224** monté sur le bras articulé **210.**

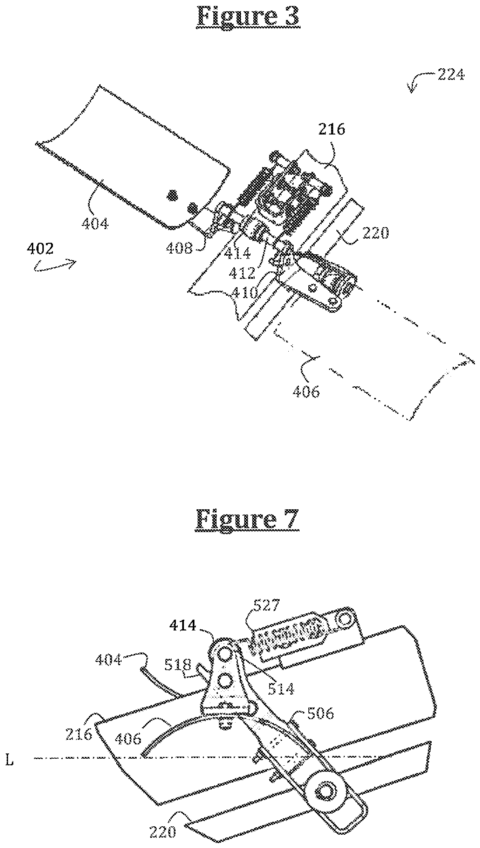

En référence aux figures 3 à 7, le dispositif de compensation de pression **224** va à présent être décrit plus en détail.

En référence à la figure 3, le dispositif de compensation de pression **224** comporte tout d'abord un système d'aileron **402**, encore dénommé ensemble d'aileron, lequel comporte dans l'exemple décrit deux ailerons **404, 406** présentant des concavités respectives orientées à l'opposé l'une de l'autre. Cette orientation opposée des concavités permet d'obtenir le même effet aérodynamique, quelle que soit le sens de circulation du véhicule ferroviaire **100.** A titre de variante non représentée, on peut prévoir que les deux ailerons ont des angles d'incidence différents, de sorte que l'effet aérodynamique est variable selon le sens de circulation du véhicule ferroviaire.

Le système d'aileron **402** comporte en outre deux bielles **408**, **410** auxquelles les deux ailerons **404**, **406** sont respectivement fixés, ainsi qu'un arbre **412** aux extrémités duquel les bielles **408**, **410** sont respectivement fixées. Cet arbre **412** présente un axe principal **A412**, qui est transversal en référence à la direction L et qui forme l'axe de pivotement global du système d'aileron sur la deuxième plage de développement du bras articulé **210**, comme on le verra ci-après. Le système d'aileron **402** comporte en outre un galet **414** monté sur l'arbre **412.** Les deux ailerons **404**, **406** sont situés transversalement de part et d'autre de la tige supérieure principale **216.**

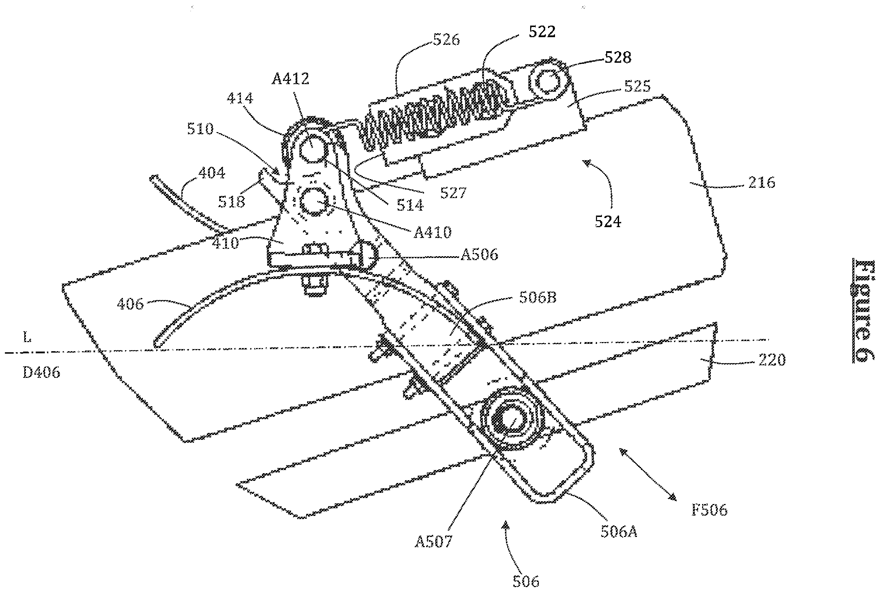

Les ailerons **404**, **406** présentent, avec la direction longitudinale L, un angle respectif noté **α404, α406.** Chacun de ces angles est pris entre cette direction L et la droite, respectivement **D404**, **D406** passant par les extrémités libres opposées de chaque aileron. Sur les figures 6 et suivantes, on a illustré la variation de l'angle **α406** avec le développement du pantographe, étant entendu que la variation de l'autre angle **α404** est identique.

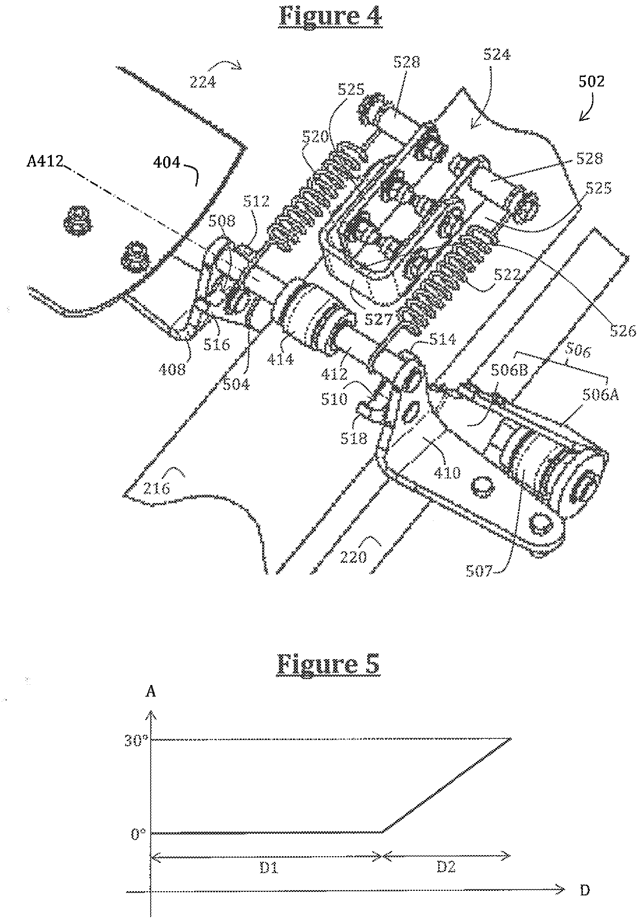

En référence aux figures 4 et 6, le dispositif de compensation de pression **224** comporte en outre un dispositif d'orientation **502** du système d'aileron **402**, et en particulier des ailerons **404**, **406**, conçu pour faire varier l'angle **α404, α406** en fonction du développement du bras articulé **210.**

En référence à la figure 5, le développement du bras articulé **210** comporte en particulier une première plage de développement dans laquelle l'archet **208** se déplace entre une position basse et une position intermédiaire séparées d'une première distance verticale D1 d'au moins 500 mm, par exemple comprise entre 2 000 mm et 3 000 mm, par exemple égale à 2 500 mm, et une deuxième plage de développement dans laquelle l'archet **208** se déplace entre la position intermédiaire et une position haute séparées d'une deuxième distance verticale D2 d'au moins 500 mm, par exemple comprise entre 500 mm et 1 500 mm, par exemple égale à 1 000 mm.

Comme cela ressortira plus clairement de la suite de la description, le dispositif d'orientation **502** est conçu pour, sur la première plage de déploiement du bras articulé **210**, conférer un premier type de profil à chaque angle **α404, α406.** En particulier, cet angle peut être sensiblement constant sur cette première plage. De plus ce dispositif d'orientation **502** est conçu pour, sur la deuxième plage de déploiement du bras articulé **210**, conférer un autre type de profil à chaque angle **α404, α406.** En particulier, cet angle peut subir une augmentation sensible sur cette deuxième plage, notamment de plus de 1°, par exemple de 20° à 40°, par exemple de 30°.

De retour aux figures 4 et 6, dans l'exemple décrit, le dispositif d'orientation **502** comporte tout d'abord deux bielles supplémentaires **504**, **506**, sur lesquelles les bielles **408, 410** sont montées de manière transversalement pivotante autour d'un axe transversal respectif **A408, A410.** Les deux axes A408, A410 sont mutuellement confondus, tout en étant parallèles à l'axe A412 ci-dessus. Comme on le verra dans ce qui suit, la variation de l'angle **α404, α406** peut être commandée par les bielles supplémentaires **504**, **506**, lesquelles sont dénommées premiers organes de commande.

On va maintenant décrire la structure de l'une **506** de ces bielles de commande, notamment en référence à la figure 6, étant entendu que la structure de l'autre **504** de ces bielles est identique. La bielle **506** comprend une embase creuse **506A**, de forme tubulaire, dans le volume intérieur de laquelle est reçu un galet **507.** Ce dernier est monté pivotant sur la tige supérieure auxiliaire **220**, autour d'un axe **A507** parallèle à celui **A412.** Cette bielle **506** possède en outre un corps massif **506B**, fixé sur le sommet de l'embase **506A** par tout moyen approprié, notamment de manière amovible. L'extrémité supérieure du corps **506B**, opposée à l'embase, présente une forme de fourche. Cette dernière définit une encoche **510**, délimitée par une butée avant **514** et une butée arrière **518.** Sur la figure 4, on a référencé **508, 512 et 516** l'encoche et les deux butées de la bielle **504.**

Le corps **506B** de chaque premier organe de commande **504**, **506** est tout d'abord monté pivotant sur la tige supérieure principale **216**, autour d'un axe transversal respectif **A504, A506.** Par ailleurs, l'embase de chacun de ces organes de commande peut glisser le long du galet **507**, selon la flèche **F506** à la figure 6. Chaque organe de commande **504**, **506** présente par conséquent une liaison de type pivot glissant avec cette tige **220.** De cette manière, comme on le verra mieux ci-après, ces organes **504**, **506** gardent un angle sensiblement constant avec la direction longitudinale **L**, quel que soit le développement du bras articulé **210.**

Le dispositif d'orientation **502** comporte en outre une cornière **524** en forme de U, fixée à la tige supérieure principale **216** par tout moyen approprié. Cette cornière présente deux ailes **525** s'étendant à partir d'une âme **526.** Comme on le verra ci-après, la surface extérieure **527** de cette âme **526**, opposée aux ailes **525**, est adaptée pour venir en butée contre le galet **414.** Dans l'exemple illustré, cette surface de butée **527** est rectiligne, tout en étant perpendiculaire à la surface supérieure de la tige **216.** Comme on le verra dans ce qui suit, la variation de l'angle **α404, α406** peut être commandée également par cette âme **526** et sa surface de butée **527**, lesquelles forment un deuxième organe de commande au sens de l'invention.

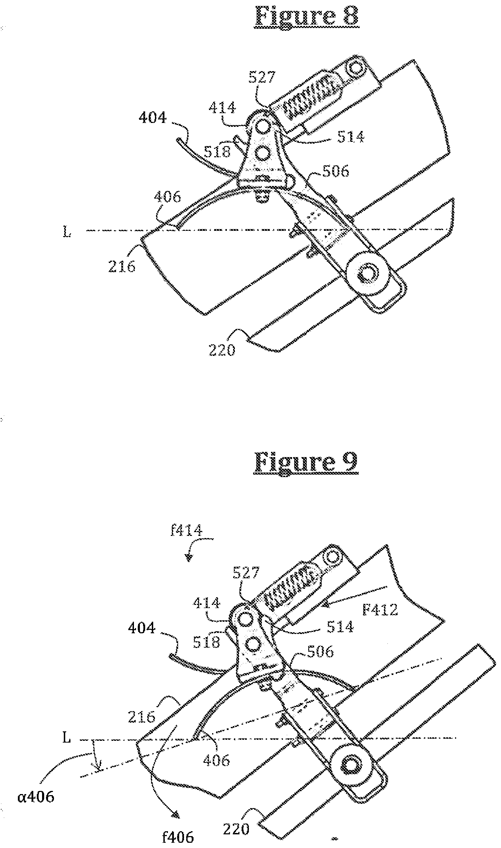

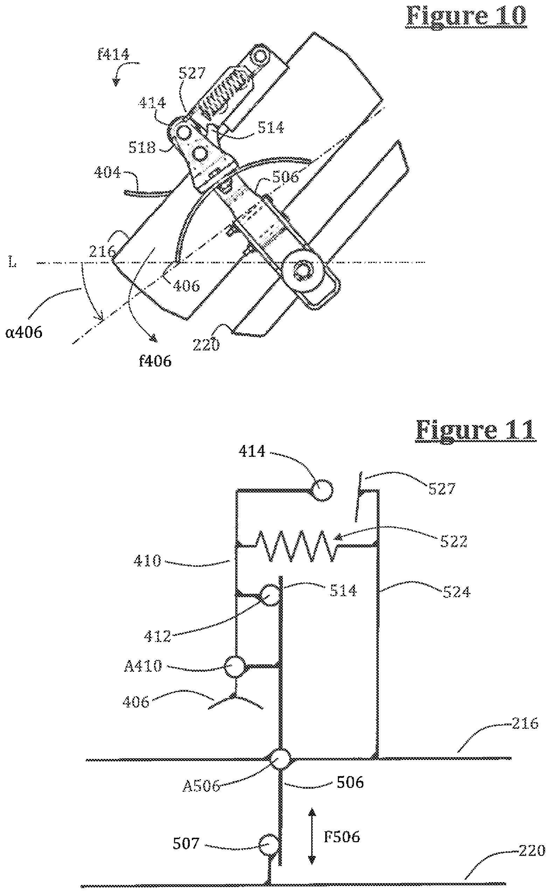

Le dispositif d'orientation **502** comporte en outre deux ressorts **520**, **522**, dont une première extrémité est fixée sur une aile **525** de la cornière, via un pion respectif **528**, et dont l'autre extrémité est fixée sur l'arbre **412** du système d'aileron. Les ressorts **520**, **522** sont conçus pour fonctionner en traction afin de maintenir cet arbre **412** contre les butées avant **512**, **514** sur la première plage de développement du bras articulé **210**, comme illustré notamment en figure 6 ou 7, ou de maintenir le galet **414** contre la surface de butée **527** sur la deuxième plage de développement du bras articulé **210**, comme illustré notamment en figure 9 ou 10.

La position basse de l'archet **208** est illustrée sur cette figure 6, ainsi que sur la figure 11. Cette dernière est un schéma de principe illustrant les différents éléments mécaniques, décrits ci-dessus, ainsi que les liaisons existant entre ces éléments. Dans cette position basse, le bras articulé **210** est dans une configuration repliée. Ainsi la butée **527** est à distance du galet **414**, de sorte que les ressorts **520**, **522** immobilisent l'arbre **412** contre la butée avant **514**, en le plaquant contre cette dernière.

Les ailerons **404, 406** présentent par conséquent un angle sensiblement nul avec les pièces de support **408, 410**, qui elles-mêmes présentent un angle sensiblement nul avec la direction longitudinale L. Ainsi, les ailerons **404, 406** présentent un angle **α404, α406** sensiblement nul avec la direction longitudinale L, comme montré sur la figure 6. En outre, comme les ailerons **404, 406** possèdent des concavités orientées à l'opposé l'une de l'autre et qu'ils présentent un angle d'incidence de 0°, une portance sensiblement nulle est appliquée par les ailerons **404, 406** sur le bras articulé **210.**

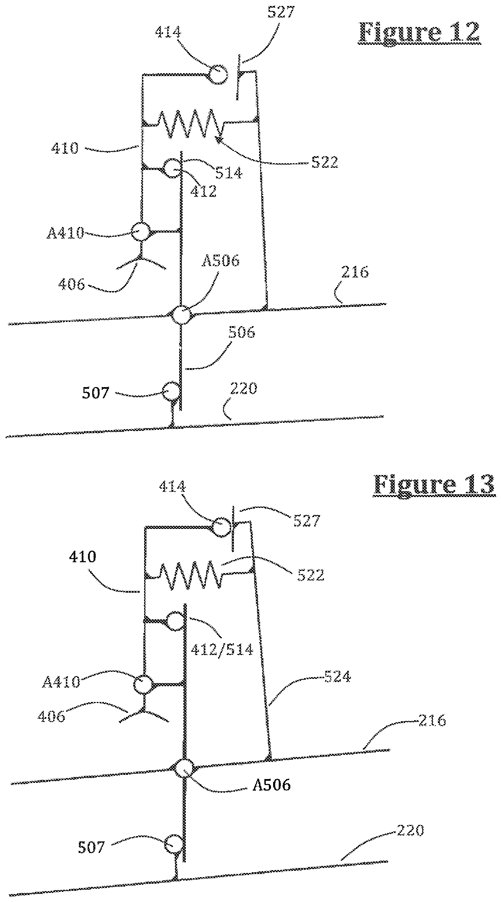

En référence aux figures 7 et 12, l'archet **208** est situé désormais entre sa position basse et sa position intermédiaire. La butée **524** est toujours à distance du galet **414** de sorte que, comme sur les figures 6 et 11, les ressorts **520**, **522** immobilisent l'arbre **412** contre la butée avant **512**, **514.** Les ailerons **404, 406** conservent par conséquent un angle **α404, α406** sensiblement nul avec la direction longitudinale **L.**

En référence aux figures 8 et 13, l'archet **208** se trouve désormais dans sa position dite intermédiaire. La butée **527** entre en contact avec le galet **414**, l'arbre **412** étant toujours immobilisé contre la butée avant **512, 514** par les ressorts **520, 522.** Les ailerons **404, 406** conservent donc un angle sensiblement nul avec la direction longitudinale **L.**

Au sens de l'invention, la première plage de développement du bras articulé **210** est délimitée par les positions extrêmes des figures 6 et 11 d'une part, ainsi que 8 et 13 d'autre part. Dans cette plage, la variation de l'angle **α404, α406** est commandée uniquement par les bielles **504, 506.** Etant donné que ces bielles présentent un angle constant avec la direction **L** et que l'arbre **414** est immobilisé contre ces bielles sous l'action des ressorts **520**, **522**, l'angle précité **α404, α406** est également constant, en l'occurrence nul dans l'exemple illustré.

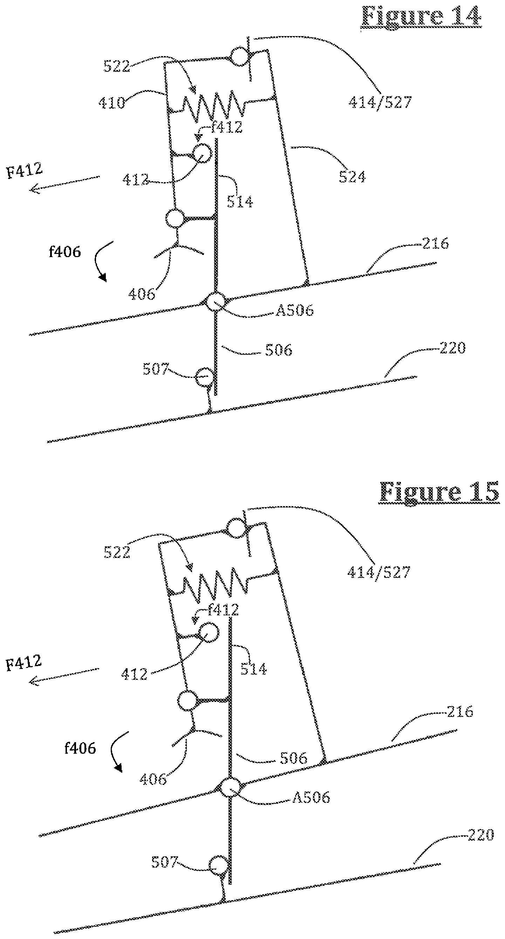

En référence maintenant aux figures 9 et 14, l'archet **208** est situé désormais entre sa position intermédiaire et sa position haute. Pour arriver à cette nouvelle position depuis celle intermédiaire, le déplacement de la tringle inférieure **220** par rapport celle supérieure **216** a provoqué une rotation supplémentaire de la bielle **506** autour de son axe **A506** dans le sens horaire. Le galet **414** étant déjà en contact avec la butée **527** depuis la position intermédiaire, la rotation de la bielle **506** a entrainé l'inclinaison de l'autre bielle **410** en appui sur la butée **527** au travers d'une rotation de la bielle **410** autour de l'axe **A410** dans le sens antihoraire et du glissement du galet **414** vers le haut sur la butée **527.** Du fait des liaisons fixes entre la bielle **408** ou **410** et l'aileron **404** ou **406**, ce dernier subit la même inclinaison.

Par conséquent, l'angle **α404, α406** ne présente plus une valeur constante, comme dans la première plage de déploiement décrite ci-dessus. Au contraire, cet angle augmente au fur et à mesure du déploiement du bras articulé **210**, en l'occurrence de manière linéaire. Ainsi, lorsque le véhicule ferroviaire **100** se déplace vers la gauche en figure 2, une portance croissante dirigée vers le haut est appliquée par l'aileron **406** sur le bras articulé **210**, ce qui a pour effet d'inciter le bras articulé **210** à se développer afin de compenser l'effort aérodynamique inverse croissant qui s'applique sur le pantographe. Inversement, lorsque le véhicule ferroviaire **100** se déplace vers la droite en figure 2, une déportance croissante dirigée vers le bas est appliquée par l'aileron **404** sur le bras articulé **210**, ce qui a pour effet d'inciter le bras articulé **210** à se replier afin de compenser l'effort aérodynamique inverse qui s'applique sur le pantographe. Par conséquent, l'archet **208** maintient une pression quasi constante sur la caténaire **104** quel que soit le sens de marche du véhicule ferroviaire.

Les figures 10 et 15 illustrent enfin l'archet **208** dans sa position terminale haute. L'arbre **412** est repoussé le long des encoches, jusqu'à se trouver au voisinage des butées arrière **516**, **518.** On notera que, durant son déplacement à l'opposé des butées **510, 512,** cet arbre **412** n'est pas en contact avec le fond des encoches précitées. Par ailleurs, par rapport à sa position intermédiaire ci-dessus, le galet **414** a continué à rouler vers le haut sur la butée **527** et la bielle **410** a continué sa rotation autour de l'axe **A410** sans le sens antihoraire. L'angle **α404, α406** des ailerons **404, 406** avec la direction longitudinale présente une valeur maximale, dans la configuration de ces figures 10 et 15.

Au sens de l'invention, la deuxième plage de développement du bras articulé **210** est délimitée par les positions extrêmes des figures 8 et 13 d'une part, ainsi que 10 et 15 d'autre part. Dans cette plage, la variation de l'angle **α404, α406** est commandée principalement par la butée **527**, le long de laquelle roule et pivote le galet **414.** L'angle précité **α404, α406** est désormais variable, en l'occurrence linéairement croissant dans l'exemple illustré.

La présente invention n'est pas limitée au mode de réalisation décrit précédemment, mais est au contraire définie par les revendications qui suivent. Il sera en effet apparent à l'homme du métier que des modifications peuvent y être apportées.

Par exemple, le mécanisme d'orientation des ailerons **404, 406** peut utiliser un profil de came. En particulier, on peut prévoir que la surface **527** n'est pas rectiligne, en particulier qu'elle présente un tel profil de came. Dans ce cas l'angle **α404, α406** formé par les ailerons avec la direction longitudinale peut par exemple augmenter de façon non linéaire, le long de la deuxième plage.

Ainsi, dans le présent exemple, la compensation de portance/déportance du pantographe nécessaire au bon effort à la tête implique une variation d'angle des ailerons relativement linéaire en fonction du développement du pantographe dans sa deuxième plage. En revanche, pour un autre pantographe, cela pourrait potentiellement nécessiter une variation d'angle des ailerons plus importante vers le début du changement de variation et moins importante vers la fin, ce qui nécessiterait dans ce cas une courbe par exemple de type globalement logarithmique. Pour encore un autre pantographe, cela pourrait potentiellement nécessiter une variation d'angle des ailerons moins importante vers le début du changement de variation et plus importante vers la fin, ce qui nécessiterait dans ce cas une courbe par exemple de type globalement exponentielle. Encore une autre possibilité pourrait consister à faire varier l'angle des ailerons sur une plage de développement du pantographe, puis d'arrêter la rotation avant le développement complet du pantographe. Dans tous ces cas ci-dessus, la surface de butée **527** doit avoir un profil de type "came", une surface linéaire ne permettant pas d'obtenir les variations d'angle désirées.

De façon analogue, on peut prévoir que, le long de la première plage, l'angle **α404, α406** formé par les ailerons avec la direction longitudinale est constant mais non nul. Dans le cas où le galet **507** coulisse sur une surface non rectiligne, il est possible d'obtenir un angle **α404, α406** qui n'est pas constant. Dans ce cas, conformément à la définition de l'invention, le profil de variation de cet angle, le long de cette première plage, reste différent de son profil de variation, le long de la deuxième plage.

Pour pallier une rupture des ressorts **520**, **522**, la variation d'inclinaison des ailerons **404**, **406** est bridée par les butées avant **512**, **514** et arrière **516**, **518** et par la liaison de type pivot coulissant, assurée par les éléments mécaniques **506A** et **507.**

Les ressorts de traction **520**, **522** peuvent être remplacés par des ressorts de torsion autour de l'axe **A412** et en appui sur l'axe **A410**, ou bien autour de l'axe **A410** et en appui sur l'axe **A412.**

Par ailleurs, les termes utilisés dans les revendications ne doivent pas être compris comme limités aux éléments du mode de réalisation décrit précédemment, mais doivent au contraire être compris comme couvrant tous les éléments équivalents que l'homme du métier peut déduire à partir de ses connaissances générales.

## Revendications

1. Pantographe (108) comportant :
- un châssis (202) auquel un repère (R) est attaché, le repère (R) comportant une direction longitudinale (L), une direction verticale (V) et une direction transversale (T), la direction longitudinale (L) et la direction verticale (V) définissant ensemble un plan vertical,
- un archet (208) destiné à être au contact d'une caténaire (104) pour capter un courant d'alimentation passant dans la caténaire (104),
- un bras articulé (210) reliant l'archet (208) au châssis (202) et conçu pour se développer verticalement afin de déplacer dans le plan vertical l'archet (208) par rapport au châssis (202), ce bras comprenant une tige supérieure principale (216) et une tige supérieure auxiliaire (220),
- un ensemble d'aileron comprenant au moins un aileron (404, 406) formant, dans le plan vertical, un angle (α404, α406) avec la direction longitudinale (L),
- un dispositif d'orientation (502) de l'aileron (404, 406) conçu pour faire varier l'angle (α404, α406) de l'aileron (404, 406) avec la direction longitudinale (L) en fonction du déploiement du bras articulé (210),
- ce dispositif d'orientation comprenant des moyens (504, 506 ; 526, 527) de commande de la variation de l'angle de l'aileron, ces moyens de commande comprenant au moins un premier organe de commande (504, 506), articulé à la fois sur la tige supérieure principale (216) et sur la tige supérieure auxiliaire (220) du bras (210)
le pantographe étant **caractérisé en ce que** les moyens de commande de la variation de l'angle de l'aileron comprennent en outre au moins un deuxième organe de commande (526, 527), solidaire de la tige supérieure principale (216),
ce dispositif d'orientation (502) étant adapté pour que
- sur une première plage de développement du bras articulé (210) dans laquelle l'archet (208) se déplace entre une position basse et une position intermédiaire, le premier organe de commande (504, 506) est apte à commander la variation de l'angle (α404, α406) de l'aileron indépendamment du deuxième organe de commande (526, 527), de manière à conférer un premier profil de variation d'angle à l'aileron sur cette première plage ;
- sur une deuxième plage de développement du bras articulé (210) dans laquelle l'archet (208) se déplace entre la position intermédiaire et une position haute, le deuxième organe de commande (526, 527) est apte à commander la variation de l'angle (α404, α406) de l'aileron, de manière à conférer un deuxième profil de variation d'angle à l'aileron sur cette deuxième plage.

2. Pantographe selon la revendication 1, dans lequel le premier profil de variation d'angle correspond à un angle (α404, α406) de valeur sensiblement constante, notamment nulle.

3. Pantographe selon la revendication 1 ou 2, dans lequel le deuxième profil de variation d'angle correspond à un angle (α404, α406) de valeur croissante, notamment linéaire.

4. Pantographe selon l'une des revendications précédentes, dans lequel le premier organe de commande (504, 506) est articulé sur la tige supérieure principale (216) au moyen d'une liaison pivot et, sur la tige supérieure auxiliaire (220), au moyen d'une liaison ponctuelle.

5. Pantographe selon l'une des revendications précédentes, dans lequel le premier organe de commande (504, 506) est articulé sur la tige supérieure principale (216) et sur la tige supérieure auxiliaire (220), de manière à garder un angle sensiblement constant avec la direction longitudinale (L).

6. Pantographe selon la revendication 4 ou 5, dans lequel le premier organe de commande (506) comprend une embase creuse (506A), dans le volume intérieur de laquelle est reçu un galet (507) monté pivotant sur la tige supérieure auxiliaire (220), autour d'un axe transversal (A507), ainsi qu'un corps massif (506B) fixé sur l'embase (506A), notamment de manière amovible, ledit corps étant monté pivotant sur la tige supérieure principale (216) autour d'un autre axe transversal (A504, A506).

7. Pantographe selon l'une des revendications précédentes, dans lequel l'aileron (404, 406) est articulé sur le premier organe de commande (504, 506) et le pantographe comprend des moyens d'immobilisation (520, 522), propres à immobiliser l'ensemble d'aileron (404, 406) par rapport au premier organe de commande (504, 506) dans une position d'immobilisation, dans la première plage de développement.

8. Pantographe selon la revendication précédente, dans lequel l'aileron (404, 406) est articulé sur le premier organe de commande (504, 506) au moyen d'une liaison pivot (A410).

9. Pantographe selon la revendication 7 ou 8, dans lequel les moyens d'immobilisation comprennent un dispositif élastique (520, 522), notamment au moins un ressort de traction (520, 522) dont une première extrémité est solidaire de l'ensemble d'aileron (404, 406) et dont l'autre extrémité est solidaire de la tige supérieure principale (216).

10. Pantographe selon l'une des revendications 7 à 9, dans lequel le deuxième organe de commande (526, 527) est apte à déplacer l'ensemble d'aileron à partir de sa position d'immobilisation, dans la deuxième plage de développement.

11. Pantographe selon la revendication 10, dans lequel l'aileron (404, 406) est articulé sur le deuxième organe de commande (526, 527) pendant la deuxième plage de développement du bras articulé (201), au moyen d'une liaison ponctuelle (414, 527).

12. Pantographe selon l'une des revendications précédentes, dans lequel le deuxième organe de commande est une butée (526) présentant une surface de butée (527), l'ensemble d'aileron (504, 506) étant apte à se déplacer le long d'au moins une partie de cette surface de butée (527), dans la deuxième plage de développement.

13. Pantographe selon la revendication 12, dans lequel la surface de butée est une surface de came.

14. Pantographe selon la revendication 12 ou 13, dans lequel l'ensemble d'aileron comprend un arbre (412) muni d'un galet (414), ledit galet étant propre à se déplacer le long d'au moins une partie de la surface de butée (527).

15. Véhicule ferroviaire (100) comportant :
- un toit (106),
- un pantographe (108) selon l'une quelconque des revendications précédentes, le châssis (202) du pantographe étant fixé au toit (106) du véhicule ferroviaire (100).

## Patentansprüche

1. Scherenstromabnehmer (108), Folgendes beinhaltend:
- ein Gestell (202), an dem eine Markierung (R) angebracht ist, wobei die Markierung (R) eine Längsrichtung (L), eine vertikale Richtung (V) und eine Querrichtung (T) beinhaltet, wobei die Längsrichtung (L) und die vertikale Richtung (V) gemeinsam eine vertikale Ebene definieren,
- einen Bogen (208), der dazu bestimmt ist, in Kontakt mit einer Oberleitung (104) zu sein, um einen Versorgungsstrom abzunehmen, der durch die Oberleitung (104) strömt,
- einen Gelenkarm (210), der den Bogen (208) mit dem Gestell (202) verbindet, und gestaltet ist, um sich vertikal zu entfalten, um den Bogen (208) in Bezug auf das Gestell (202) in der vertikalen Ebene zu bewegen, wobei der Arm eine obere Hauptstange (216) und eine obere Hilfsstange (220) umfasst,
- eine Rippenanordnung, umfassend mindestens eine Rippe (404, 406), die in der vertikalen Ebene einen Winkel (*α*404, *α*406) mit der Längsrichtung (L) bildet,
- eine Ausrichtungsvorrichtung (502) der Rippe (404, 406), die gestaltet ist, um den Winkel (*α*404, *α*406) der Rippe (404, 406) mit der Längsrichtung (L) in Abhängigkeit von der Entfaltung des Gelenkarmes (210) variieren zu lassen,
- wobei diese Ausrichtungsvorrichtung Mittel (504, 506; 526, 527) zum Steuern der Variation des Winkels der Rippe umfasst, wobei diese Mittel zum Steuern mindestens ein erstes Steuerorgan (504, 506) umfassen, das sowohl auf der oberen Hauptstange (216) und auf der oberen Hilfsstange (220) des Armes (210) angelenkt ist
wobei der Scherenstromabnehmer **dadurch gekennzeichnet ist, dass** die Mittel zum Steuern der Variation des Winkels der Rippe weiter mindestens ein zweites Steuerorgan (526, 527) umfassen, das fest mit der oberen Hauptstange (216) verbunden ist,
wobei diese Ausrichtungsvorrichtung (502) angepasst ist, damit
- in einem ersten Entfaltungsbereich des Gelenkarmes (210), in dem sich der Bogen (208) zwischen einer unteren Position und einer Zwischenposition bewegt, das erste Steuerorgan (504, 506) imstande ist, die Variation des Winkels (*α*404, *α*406) der Rippe unabhängig vom zweiten Steuerorgan (526, 527) zu steuern, um der Rippe in diesem ersten Bereich ein erstes Winkelvariationsprofil zu verleihen;
- in einem zweiten Entfaltungsbereich des Gelenkarmes (210), in dem sich der Bogen (208) zwischen der Zwischenposition und einer oberen Position bewegt, das zweite Steuerorgan (526, 527) imstande ist, die Variation des Winkels (*α*404, *α*406) der Rippe zu steuern, um der Rippe in diesem zweiten Bereich ein zweites Winkelvariationsprofil zu verleihen.

2. Scherenstromabnehmer nach Anspruch 1, wobei das erste Winkelvariationsprofil einem Winkel (*α*404, *α*406) mit einem im Wesentlichen konstanten Wert, insbesondere null, entspricht.

3. Scherenstromabnehmer nach Anspruch 1 oder 2, wobei das zweite Winkelvariationsprofil einem Winkel (*α*404, *α*406) mit insbesondere linear steigendem Wert entspricht.

4. Scherenstromabnehmer nach einem der vorstehenden Ansprüche, wobei das erste Steuerorgan (504, 506) durch eine erste Schwenkverbindung auf der oberen Hauptstange (216), und durch eine Punktverbindung auf der oberen Hilfsstange (220) angelenkt ist.

5. Scherenstromabnehmer nach einem der vorstehenden Ansprüche, wobei das erste Steuerorgan (504, 506) auf der oberen Hauptstange (216) und auf der oberen Hilfsstange (220) angelenkt ist, um einen im Wesentlichen konstanten Winkel it der Längsrichtung (L) zu behalten.

6. Scherenstromabnehmer nach Anspruch 4 oder 5, wobei das erste Steuerorgan (506) eine hohle Basis (506A) umfasst, in deren Innenvolumen eine Rolle (507) aufgenommen ist, die schwenkbar auf der oberen Hilfsstange (220) um eine Querachse (A507) herum montiert ist, sowie einen massiven Körper (506B), der an der Basis (506A) insbesondere abnehmbar befestigt ist, wobei der Körper schwenkbar auf der oberen Hauptstange (216) um eine Querachse (A504, A506) herum montiert ist.

7. Scherenstromabnehmer nach einem der vorstehenden Ansprüche, wobei die Rippe (404, 406) auf dem ersten Steuerorgan (504, 506) angelenkt ist, und der Scherenstromabnehmer Immobilisierungsmittel (520, 522) umfasst, die geeignet sind, die Rippenanordnung (404, 406) in Bezug auf das erste Steuerorgan (504, 506) in einer Immobilisierungsposition in dem ersten Entfaltungsbereich zu immobilisieren.

8. Scherenstromabnehmer nach dem vorstehenden Anspruch, wobei die Rippe (404, 406) anhand einer Schwenkverbindung (A410) auf dem ersten Steuerorgan (504, 506) angelenkt ist.

9. Scherenstromabnehmer nach Anspruch 7 oder 8, wobei die Immobilisierungsmittel eine elastische Vorrichtung (520, 522), insebsondere mindestens eine Zugfeder (520, 522) umfassen, deren erstes Ende fest mit der Rippenanordnung (404, 406) verbunden ist, und deren anderes Ende fest mit der oberen Hauptstange (216) verbunden ist.

10. Scherenstromabnehmer nach einem der Ansprüche 7 bis 9, wobei das zweite Steuerorgan (526, 527) imstande ist, die Rippenanordnung aus ihrer Immobilisierungsposition in dem zweiten Entfaltungsbereich zu verschieben.

11. Scherenstromabnehmer nach Anspruch 10, wobei die Rippe (404, 406) auf dem zweiten Steuerorgan (526, 527) während des zweiten Entwicklungsbereichs des Gelenkarms (201) anhand einer Punktverbindung (414, 527) angelenkt ist.

12. Scherenstromabnehmer nach einem der vorstehenden Ansprüche, wobei das zweite Steuerorgan ein Anschlag (526) ist, der eine Anschlagfläche (527) aufweist, wobei die Rippenanordnung (504, 506) imstande ist, sich entlang mindestens eines Teils dieser Anschlagfläche (527) in dem zweiten Entfaltungsbereich zu verschieben.

13. Scherenstromabnehmer nach Anspruch 12, wobei die Anschlagfläche eine Nockenfläche ist.

14. Scherenstromabnehmer nach Anspruch 12 oder 13, wobei die Rippenanordnung eine Welle (412) umfasst, die mit einer Rolle (414) versehen ist, wobei die Rolle geeignet ist, sich entlang mindestens eines Teils der Anschlagfläche (527) zu verschieben.

15. Schienenfahrzeug (100), umfassend:
- ein Dach (106),
- einen Scherenstromabnehmer (108) nach einem der vorstehenden Ansprüche,
wobei das Gestell (202) des Scherenstromabnehmers am Dach (106) des Schienenfahrzeugs (100) befestigt ist.

## Claims

1. Pantograph (108) comprising:
- a chassis (202) to which a reference frame (R) is attached, the reference frame (R) comprising a longitudinal direction (L), a vertical direction (V) and a transverse direction (T), the longitudinal direction (L) and the vertical direction (V) together defining a vertical plane,
- a bow collector (208) intended to be in contact with a catenary (104) in order to collect a power supply current passing through the catenary (104),
- an articulated arm (210) connecting the bow collector (208) to the chassis (202) and designed to deploy vertically in order to move, in the vertical plane, the bow collector (208) with respect to the chassis (202), this arm comprising a main upper rod (216) and an auxiliary upper rod (220),
- an aileron assembly comprising at least one aileron (404, 406) forming, in the vertical plane, an angle (α404, α406) with the longitudinal direction (L),
- a device (502) for orienting the aileron (404, 406) designed to vary the angle (α404, α406) of the aileron (404, 406) with the longitudinal direction (L) according to the deployment of the articulated arm (210),
-- this orientation device comprising means (504, 506; 526, 527) for controlling the variation in the angle of the aileron, these control means comprising at least a first control member (504, 506), articulated both on the main upper rod (216) and on the auxiliary upper rod (220) of the arm (210) the pantograph being **characterised in that** the means for controlling the variation in the angle of the aileron further comprise at least a second control member (526, 527), rigidly connected to the main upper rod (216), this orientation device (502) being adapted in order for
- over a first range of deployment of the articulated arm (210) in which the bow collector (208) moves between a low position and an intermediate position, the first control member (504, 506) is capable of controlling the variation in the angle (α404, α406) of the aileron independently of the second control member (526, 527), in such a way as to confer a first profile of variation in angle on the aileron over this first range;
- over a second range of deployment of the articulated arm (210) in which the bow collector (208) moves between the intermediate position and a high position, the second control member (526, 527) is capable of controlling the variation in the angle (α404, α406) of the aileron, in such a way as to confer a second profile of variation in angle on the aileron over this second range.

2. Pantograph according to claim 1, wherein the first profile of variation in angle corresponds to an angle (α404, α406) having a substantially constant value, namely zero.

3. Pantograph according to claim 1 or 2, wherein the second profile of variation in angle corresponds to an angle (α404, α406) having an increasing value, namely linear.

4. Pantograph according to one of the previous claims, wherein the first control member (504, 506) is articulated on the main upper rod (216) via a pivot link and, on the auxiliary upper rod (220), via a single-point link.

5. Pantograph according to one of the previous claims, wherein the first control member (504, 506) is articulated on the main upper rod (216) and on the auxiliary upper rod (220), in such a way as to keep a substantially constant angle with the longitudinal direction (L).

6. Pantograph according to claim 4 or 5, wherein the first control member (506) comprises a hollow base (506A), in the inner volume of which a roller (507) pivotably mounted on the auxiliary upper rod (220), about a transverse axis (A507), is received, as well as a massive body (506B) fastened onto the base (506A), namely removably, said body being pivotably mounted on the main upper rod (216) about another transverse axis (A504, A506) .

7. Pantograph according to one of the previous claims, wherein the aileron (404, 406) is articulated on the first control member (504, 506) and the pantograph comprises immobilisation means (520, 522), suitable for immobilising the aileron assembly (404, 406) with respect to the first control member (504, 506) in an immobilisation position, in the first range of deployment.

8. Pantograph according to the previous claim, wherein the aileron (404, 406) is articulated on the first control member (504, 506) via a pivot link (A410).

9. Pantograph according to claim 7 or 8, wherein the immobilisation means comprise an elastic device (520, 522), namely at least one tension spring (520, 522), a first end of which is rigidly connected to the aileron assembly (404, 406) and the other end of which is rigidly connected to the main upper rod (216).

10. Pantograph according to one of claims 7 to 9, wherein the second control member (526, 527) is capable of moving the aileron assembly from its immobilisation position, in the second range of deployment.

11. Pantograph according to claim 10, wherein the aileron (404, 406) is articulated on the second control member (526, 527) during the second range of deployment of the articulated arm (201), by means of a single-point link (414, 527).

12. Pantograph according to one of the previous claims, wherein the second control member is a stop (526) having a stop surface (527), the aileron assembly (504, 506) being capable of moving along at least a portion of this stop surface (527), in the second range of deployment.

13. Pantograph according to claim 12, wherein the stop surface is a cam surface.

14. Pantograph according to claim 12 or 13, wherein the aileron assembly comprises a shaft (412) provided with a roller (414), said roller being suitable for moving along at least a portion of the stop surface (527).

15. Railway vehicle (100) comprising:
- a roof (106),
- a pantograph (108) according to any one of the previous claims, the chassis (202) of the pantograph being fastened to the roof (106) of the railway vehicle (100).
